# EUROPÄISCHE PATENTANMELDUNG

(11) **EP 1 197 408 A2**
(43) Veröffentlichungstag der Anmeldung: **17.04.2002**
(21) Anmeldenummer: 01122835.0
(22) Anmeldetag: 22.09.2001
(51) Int. Cl.: B60T 8/00

(54) **Fahrdynamik-Regelverfahren eines Kraftfahrzeuges**

(30) Priorität: 12.10.2000 DE 10050421
(71) Anmelder: Bayerische Motoren Werke Aktiengesellschaft, 80809 München (DE)
(72) Erfinder: Müller, Rudi, 82281 Egenhofen (DE); Beiker, Sven, Dr., 80803 München (DE)

(57) **Zusammenfassung**

Die Erfindung betrifft ein Fahrdynamik-Regelverfahren eines insbesondere vierrädrigen Kraftfahrzeuges, wobei das zwischen Rädern und Fahrbahn zur Verfügung stehende Kraftschluss-Potential ermittelt und durch Vergleich mit der ebenfalls ermittelten momentanen Kraftschluss-Ausnutzung eine Kraftschluss-Reserve bestimmt wird. Erfindungsgemäß werden neben den in der Horizontalebene wirkenden Kräften zusätzlich die Vertikalbewegungen des Kraftfahrzeug-Aufbaus gegenüber den Rädern bei der Bestimmung der Kraftschluss-Reserve berücksichtigt. Bevorzugt wird durch Multiplikation der in Vertikalrichtung orientierten Radlast mit einem geschätzten oder mittels eines Sensors ermittelten Reibwert zwischen Radreifen und Fahrbahn die vom Radreifen maximal übertragbare Horizontalkraft ermittelt, woraus mit den geeignet geschätzten aktuellen Werten für die in der Horizontalebene wirkende Längskraft und Seitenkraft die Kraftschluss-Reserven in Fahrzeug-Längsrichtung und in Fahrzeug-Querrichtung und in Vertikalrichtung ermittelt werden. Dann können die ermittelten Kraftschluss-Reserven einem sog. Kraftschlussregler übermittelt werden, der unter Berücksichtigung des gewünschten Fahrmanövers eine günstige Nutzung des aktuellen Kraftschlußangebotes veranlaßt.

## Beschreibung

Die Erfindung betrifft ein Fahrdynamik-Regelverfahren für ein insbesondere vierrädriges Kraftfahrzeug, wobei das zwischen Rädern und Fahrbahn zur Verfügung stehende Kraftschluss-Potential ermittelt und durch Vergleich mit der ebenfalls ermittelten momentanen Kraftschluss-Ausnutzung eine Kraftschluss-Reserve bestimmt wird. Zum technischen Umfeld wird neben der DE 198 22 481 A1 auf die DE 42 00 997 A1 verwiesen.

Bekannte Systeme zur Aufrechterhaltung der Fahrstabilität können unter dem Begriff "Fahrdynamikregelung" subsumiert werden und berücksichtigen im allgemeinen den querdynamischen und längsdynamischen Zustand eines Fahrzeuges. Dieser Zustand soll dann durch aktive Eingriffe z.B. in die Lenkanlage und/oder Bremsanlage und/oder Antriebsanlage des Kraftfahrzeuges geeignet beeinflusst werden. So beschreibt bspw. die genannte DE 198 22 481 A1 eine Fahrstabilitäts-Steuerungsvorrichtung für ein Fahrzeug, das ein vorderes rechtes, ein vorderes linkes, ein hinteres rechtes und ein hinteres linkes Rad sowie ein Bremssystem zur wahlweisen separaten Bremsung eines jeden der Räder hat. Die Steuerungsvorrichtung schätzt dann ein Verhältnis einer Längskraft zu einer Vertikallast, die auf jedes der Räder wirkt, ab, und betätigt bei einem gewünschten Bremsvorgang das Fzg.-Bremssystem derart, daß das genannte Verhältnis an jedem Rad einen im wesentlichen gleichen Wert einnimmt. Bereits an dieser Stelle sei ausdrücklich darauf hingewiesen, daß bei diesem bekannten Stand der Technik die jeweilige Vertikallast aus einem als konstant angenommenen Fzg.-Gewicht in Kenntnis des Fzg-Schwerpunktes abgeschätzt wird.

In der eingangs ebenfalls genannten DE 42 00 997 A1 ist ein Verfahren zur Ermittlung der fahrdynamischen Sicherheitsreserve eines Kraftfahrzeuges beschrieben. Dieses ist mit einem Lenkwinkelsensor, mit Beschleunigungssensoren sowie mit einem Raddrehzahlsignale liefernden ABS-Gerät ausgerüstet. Zur Ermittlung der sog. fahrdynamischen Sicherheitsreserve oder Kraftschluss-Reserve werden im Steuergerät zuerst aus der Querbeschleunigung und dem Lenkwinkel ein Kraftschlusswert in Querrichtung, und dann aus der Raddrehbeschleunigung und der Längsbeschleunigung ein Kraftschlusswert in Längsrichtung ermittelt. Aus diesen beiden Kraftschlusswerten wird eine maximal erreichbare Längsbeschleunigung durch Multiplikation mit fahrzeugspezifischen Koeffizienten ermittelt, woraus dann eine Grenzkurve gebildet wird, mit welcher die aktuelle Quer- und Längsbeschleunigung des Fahrzeugs verglichen wird, um die fahrdynamische Sicherheitsreserve zu ermitteln.

Mögliche Eingriffe bspw. in das Bremssystem oder in die Antriebsregelung des Kraftfahrzeuges zur Aufrechterhaltung der Fahrstabilität können nur dann wirksam werden, wenn zwischen den Rädern bzw. Reifen und der Fahrbahn ein ausreichendes Kraftschluss-Potential zur Verfügung steht. Letzteres ist bekanntermaßen für jedes Rad eines bspw. vierrädrigen Kraftfahrzeuges von der individuellen Radlast in Vertikalrichtung abhängig, d.h. von der individuellen Radaufstandskraft, die im fahrdynamischen Zustand starken Änderungen unterworfen ist. Dies wird im bekannten Stand der Technik nicht oder nur unzureichend berücksichtigt; vgl. bspw. den Inhalt der o.g. DE 198 22 481 A1, wonach die jeweilige Vertikallast aus einem als konstant angenommenen Fzg.-Gewicht in Kenntnis des Fzg-Schwerpunktes geschätzt wird.

Im bekannten Stand der Technik wird somit nicht berücksichtigt, ab wann die Reifen keine größeren Kräfte mehr übertragen können, wenn ein Rad gelenkt, gebremst oder angetrieben wird. So kann nicht berücksichtigt werden, dass bspw. wegen ungünstiger Reibbeiwerte zwischen den Rädern und der Fahrbahnoberfläche die Vertikallast nicht ausreicht, um den erforderlichen Kraftschluss herzustellen. Daher wird in bekannten Fahrdynamik-Regelsystemen auch nicht erkannt, wann der Eingriff des Regelsystems keinen weiteren Effekt auf die Fahrzeugbewegung haben kann, nachdem die Kraftschlussgrenze eines oder mehrerer Räder erreicht ist. Dabei tritt dieser Nachteil noch verstärkt zu Tage, wenn unterschiedliche Fahrwerk-Regelsysteme vorgesehen sind, die parallel zueinander das Fahrzeug-Fahrverhalten beeinflussen können, ohne dabei direkt funktional miteinander verknüpft zu sein. Nur allgemein seien in diesem Zusammenhang längsdynamische und querdynamische und/oder vertikaldynamische Systeme genannt, die sich im bekannten Stand der Technik bei der an sich gewünschten Ausnutzung des Kraftschlusspotentials durchaus gegenseitig behindern oder in ihrer Wirkung neutralisieren können.

Ein demgegenüber verbessertes Fahrdynamik-Regelverfahren nach dem Oberbegriff des Anspruchs 1 aufzuzeigen, ist Aufgabe der vorliegenden Erfindung.
Die Lösung dieser Aufgabe ist dadurch gekennzeichnet, daß neben den in der Horizontalebene wirkenden Kräften zusätzlich die Vertikalbewegungen des Kraftfahrzeug-Aufbaus gegenüber den Rädern bei der Bestimmung der Kraftschluss-Reserve berücksichtigt werden. Bevorzugt sind hierfür im Bereich der Fahrzeug-Räder Aufbau-Höhenstandssensoren vorgesehen, mit denen diese Vertikalbewegungen festgestellt und analysiert werden können und aus deren Signalen dann für jedes Rad die in Vertikalrichtung orientierte Radlast bestimmt wird. Vorteilhafte Weiterbildungen sind Inhalt der weiteren Unteransprüche.

So wird vorgeschlagen, zur Verbesserung des Fahrverhaltens und der Fahrsicherheit das Kraftschluss-Potential zwischen Rad-Reifen und Fahrbahn optimal auszunutzen, wozu erfindungsgemäß das jeweils vorhandene Kraftschluss-Potential durch ein Rechenverfahren ermittelt wird, welches die Signale diverser Fahrwerksensoren sowie fahrwerkspezifische Kenndaten des Fahrzeugs verarbeitet. Insbesondere wird bei dieser Berechnung mit berücksichtigt, daß sich der sog. Aufbau des Fahrzeugs, d.h. im wesentlichen die Fzg.-Karosserie, in Vertikalrichtung gegenüber den Rädern bewegt, woraus Änderungen in der Radlast resultieren, die in Vertikalrichtung zwischen Rad und Fahrbahn wirkt, und die das in der Horizontalebene zwischen Rad und Fahrbahn übertragbare Kraftschlußpotential mitbestimmt.

Im weiteren wird ein erfindungsgemäßes Fahrdynamik-Regelverfahren im Sinne eines bevorzugten Ausführungsbeispieles für ein vierrädriges Kraftfahrzeug, insbesondere einen Personenkraftwagen, erläutert, der/das mit einem der bekannten Fahrdynamikregelsysteme und einer beliebigen Zweiachs-Niveauregulierung ausgestattet ist. Bekanntermaßen erlaubt es eine derartige Zweiachs-Niveauregulierung den Höhenstand des Aufbaus gegenüber der Fahrbahn radindividuell zu verändern, d.h. für jede - bevorzugt als Einzelradaufhängung ausgebildete - Radaufhängung kann der Abstand zwischen dem Bodenblech der Fzg.-Karosserie und dem Rad in gewissen Bereichen beliebig eingestellt werden.

An einem derartigen Fahrzeug, an welchem grundsätzlich die Möglichkeit gegeben sein muß, die in Fahrtrichtung orientierte (negative oder positive) Längsbeschleunigung sowie die in Querrichtung hierzu orientierte Querbeschleunigung zu messen, stehen im allgemeinen die folgenden Sensoren zur Verfügung:
- 4 Höhenstandssensoren zur Messung der Ein- und Ausfederwege des Aufbaus an den einzelnen Radaufhängungen
- 4 Raddrehzahlfühler, d.h. die sog. ABS-Sensoren
- ein Drehraten- oder Giergeschwindigkeitssensor
- ein Querbeschleunigungssensor,
- ein Lenkwinkelsensor
- zumindest ein Bremsdrucksensor, sowie
- ein Drosselklappenwinkelsensor oder ein adäquates Signal aus der Steuerungselektronik des Fzg.-Antriebsaggregates zur Ermittlung von dessen Drehmoment- oder Leistungsabgabe.

Dabei kann mit den drei letztgenannten Sensoren der Fahrerwunsch sensiert werden, nämlich eine Lenkbewegung für eine gewünschte Kurvenfahrt sowie Bremsen und "Gasgeben" für eine gewünschte negative oder positive Beschleunigung in Fzg.-Längsrichtung. Mit den davor genannten Sensoren hingegen kann das Fahrverhalten des Fahrzeugs als Resultat der Fahrervorgabe festgestellt werden. Durch Vergleich des somit festgestellten sog. Ist-Fahrzustands mit einem aus dem sensierten Fahrerwunsch ermittelten sog. Soll-Fahrzustand kann daraufhin das Fahrdynamik-Regelsystem in an sich bekannter Weise feststellen, ob sich das Fahrzeug noch auf stabilem Kurs befindet oder ob die Aktuatorik des Regelsystems bspw. durch Eingriffe in das Bremssystem oder in die Steuerung des Fzg.-Antriebsaggregates korrigierend tätig werden muß.

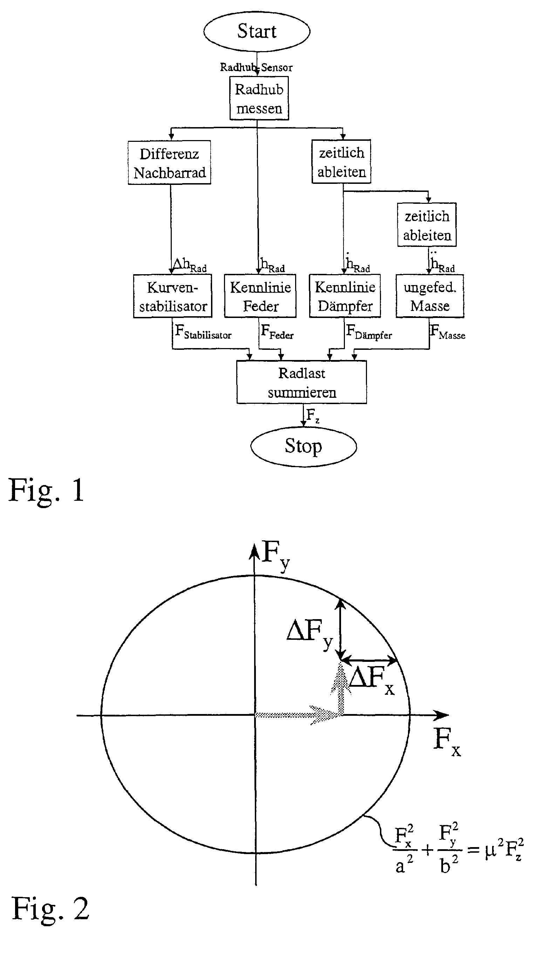

Erfindungsgemäß kann nun bspw. bzw. bevorzugt über die an den einzelnen Rädern vorhandenen Höhenstandssensoren gemäß der beigefügten Diagramm-Darstellung nach **Fig.1** aus dem Einfederungszustand eines jeden Rades dessen aktuelle Radlast ermittelt werden. Hierfür sind die selbstverständlich bekannten Kennlinien der Aufbau-Federelemente, über welche sich der Aufbau in Vertikalrichtung auf den Rädern abstützt, sowie die zugeordneten Stabilisatorraten und ggf. die Kennlinien der ebenfalls wie üblich vorgesehenen Stoßdämpfer zu berücksichtigen.

Im einzelnen kann, wenn die Radhübe der einzelnen Räder bekannt sind, zunächst der darin enthaltene Anteil der Radlast errechnet werden, der sich aufgrund des gleichseitigen Einfederns ergibt. Bei Beachtung der Radhubdifferenz der Räder einer Achse des Fahrzeuges wird der Anteil aufgrund wechselseitigen Einfederns bestimmt. Um die dynamischen Kräfte zu berücksichtigen, kann zusätzlich noch die Radhubgeschwindigkeit gebildet werden, und zwar durch zeitliche Differentiation des Höhenstandssensorsignals, die dann zusammen mit der Dämpferkennlinie und zugehöriger Übersetzung die Dämpferkraft ergibt. Durch weitere Differentiation kann durch Bestimmen der Radhubbeschleunigung auch noch die Trägheitskraft der sog. ungefederten Masse einfließen. Somit kann die Radlast eines jeden Rades durch Addition aller vier Anteile beliebig genau bestimmt werden, so wie dies in Fig.1 dargestellt ist, wobei der üblichen Fachterminologie entsprechend eine Kraft mit dem Buchstaben "F" und die Vertikalrichtung mit der Koordinate "z" bezeichnet ist, während der Buchstabe "h" eine Höhe oder Längserstreckung in z-Richtung symbolisiert und die zeitliche Differentiation durch einen Punkt über der zu differenzierenden Größe (hier: h) verdeutlicht ist.

In einem zweiten Schritt sind nun die maximal möglichen Reifenkräfte in der Horizontalebene, d.h. in Fzg.-Längsrichtung (gekennzeichnet durch die Koordinate "x") und in Fzg.-Querrichtung (gekennzeichnet durch die Koordinate "y") zu bestimmen. Da dafür eine relativ gute Kenntnis der Reifeneigenschaften (möglichst in Form eines Reifenkennfelds) und der Fahrbahnbeschaffenheit erforderlich ist, wird die Bestimmung mit dem o.g. Einsatz an Sensoren relativ schwierig. Grundsätzlich läßt ein Reibwertsensor zur Ermittlung des Reibwertes zwischen Rad bzw. Reifen und Straße eine deutliche Verbesserung der Genauigkeit erwarten, falls jedoch nicht auf einen solchen Reibwertsensor zurückgegriffen werden kann, so kann eine grundsätzlich bereits bekannte Reibwertschätzung eines bereits bekannten Fahrdynamikregelungs-Systems herangezogen werden. Eine solche Reibwertschätzung ist bspw. auch in den in jüngerer Zeit vermehrt bekannt gewordenen elektronischen Stabilisierungsprogrammen (ESP oder auch DSC genannt) enthalten.

Zusammen mit der in beschriebener Weise bereits bestimmten Radlast F_{z} kann nun zusammen mit einem gemessenen oder geeignet geschätzten Reibwert (wie üblich mit dem Buchstaben "µ" bezeichnet) ermittelt oder zumindest hinreichend genau abgeschätzt werden, welche Horizontalkräfte vom Rad bzw. Reifen maximal auf die Fahrbahnoberfläche übertragen werden können. Im Folgenden wird beispielhaft zur Vereinfachung der Rechnung die durchaus übliche Annahme getroffen (vgl. diesbezüglich auch den eingangs zitierten druckschriftlichen Stand der Technik), daß das sog. Reifenkennfeld - wie in der beigefügten **Fig.2** dargestellt - durch Ellipsen angenähert werden kann, nämlich in Form der sog. "Kraftschlußellipse". Dabei sei im folgenden die in x-Richtung (Längsrichtung) liegende Ellipsen-Halbachse mit dem Buchstaben "a" und die in y-Richtung (Querrichtung) liegende Ellipsen-Halbachse mit dem Buchstaben "b" bezeichnet.

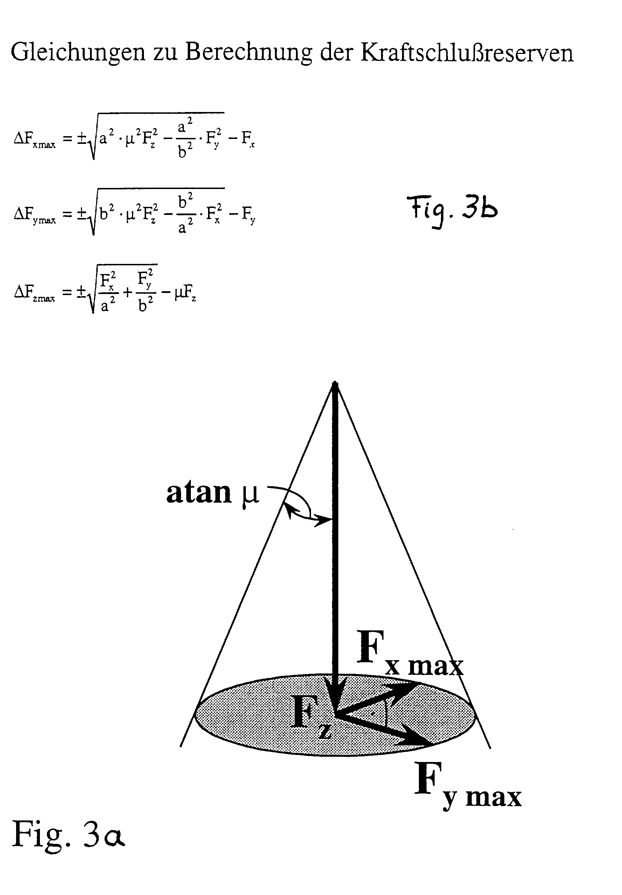

Sollen nun erfindungsgemäß Vertikalbewegungen des Kraftfahrzeug-Aufbaus gegenüber den Rädern in die Berechnung des Kraftschluss-Potentials mit eingehen, welche zu Radlastschwankungen (in Vertikalrichtung z) führen, so ist theoretisch jeder möglichen Radlast eine eigene Ellipse zuzuordnen, wobei die Flächen der Ellipsen mit steigender Radlast zunehmen. In einem dreidimensionalen Koordinatensystem, bei welchem die zwischen Rad und Fahrbahn übertragenen Horizontalkräfte die beiden Ellipsenachsen definieren und die darauf senkrecht stehende dritte Achse durch die Vertikalkraft (zwischen Rad und Fahrbahn) beschrieben wird, können nun diese Ellipsen unterschiedlicher Vertikalkräfte übereinander angeordnet werden, wodurch sich quasi als Hüllkörper ein Kegel mit elliptischer Grundfläche ergibt, der als "Kraftschluss-Kegel" bezeichnet werden kann. Zumindest gilt dies solange, wie die horizontalen Reifenkräfte sich näherungsweise durch einen linearen Zusammenhang von der Radlast abbilden lassen, so wie dies in **Fig.3a** dargestellt ist. Der Öffnungswinkel dieses Kraftschlußkegels ergibt sich dabei - wie in der Figur angegeben - aus dem momentanen Reibwert µ, wobei auch ersichtlich wird, daß sich mit abnehmenden µ proportional alle Ellipsenflächen verringern.

Bei völlig exakter Betrachtungsweise wäre infolge der tatsächlichen Reifeneigenschaften die Mantelfläche dieses Kraftschlußkegels entsprechend der Nichtlinearitäten im Übergangsbereich gekrümmt, was auch in einem Rechenprogramm berücksichtigt werden kann. Für das folgende vereinfachte Rechenverfahren wird jedoch (zunächst noch) von einer geraden Mantellinie des sog. Kraftschluss-Kegels ausgegangen.

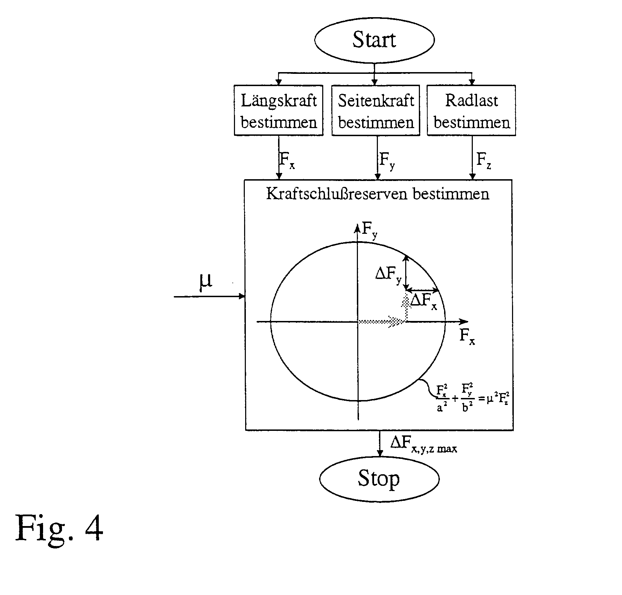

Im Detail gibt die Größe jeder einzelnen Ellipsenfläche für die jeweils zugehörige Radlast das maximal zur Verfügung stehende Kraftschluss-Potential an, welches sich - wie in Fig.3a dargestellt - durch vektorielle Addition der beiden Horizontalkomponenten F_{x,max} und F_{y,max} ergibt. Mit der Kenntnis dieser maximalen Horizontalkräfte ist nun die Kraftschlussgrenze des oder der einzelnen Reifen (oder Rades) bestimmt. Für den praktischen Gebrauch ist jedoch nicht diese Kraftschlussgrenze selbst, sondern der Abstand des momentanen Betriebspunkts der Reifenkräfte von dieser Kraftschlussgrenze von Interesse. Es interessiert also die im aktuellen Betriebspunkt noch vorliegende Kraftschluss-Reserve, d.h. das unter Berücksichtigung der aktuellen Kraftschluss-Ausnutzung noch verbleibende Kraftschlusspotential. Diese Kraftschluss-Reserve wird dabei (in der figürlichen Darstellung des sog. Kraftschluss-Kegels) durch den kürzesten Abstand zwischen dem maximal zur Verfügung stehendem Kraftschluss-Potential und der aktuellen Kraftschluss-Ausnutzung gebildet, d.h. zwischen der Mantelfläche des Kraftschluss-Kegels und dem aktuellen Betriebspunkt. Diese sog. Kraftschluss-Reserve wird nun in einem dritten Berechnungsschritt bestimmt, der prinzipiell in **Fig.4** dargestellt ist.

Benötigt werden hierfür selbstverständlich die augenblicklichen Reifenkräfte, die jedoch teilweise, nämlich in Form der bereits bestimmten Radlast F_{z} schon bekannt sind, oder die sich (in der Horizontalebene) mit Hilfe der genannten Sensorik in bekannter Weise schätzen lassen. So kann die in Querrichtung y orientierte Seitenkraft F_{y} aus der Quer- und Gierbeschleunigung näherungsweise bestimmt werden und die in Fzg.-Längsrichtung x orientierte Längskraft Fₓ aus der Längsbeschleunigung bzw. aus dem aktuellen Abgabe-Drehmoment des Fzg.-Antriebsaggregates sowie aus den Bremsdrücken ermittelt werden. Hierfür sind der bereits genannte Querbeschleunigungs- und Gierratensensor sowie die Informationen über die Rad-Drehzahen erforderlich und außerdem geeignete Werte aus dem Steuerungssystem des Fzg.-Antriebsaggregates sowie aus der an sich bekannten Bremsdruckschätzung eines bekannten Fahrdynamikregelung-Systems. Falls dabei die Bestimmung der jeweiligen Kräfte z.B. durch eine Fahrbahnneigung verfälscht wird, so können auch hierfür geeignete Schätzverfahren angewendet werden, wie sie aus der Fahrdynamikregelung grundsätzlich bekannt sind.

Nunmehr sind also die aktuellen Horizontalkräfte zwischen Rad/Reifen und Fahrbahn sowie für jedes Rad einzeln die aktuelle Kraftschlußellipse - in Kenntnis der Radlast/Vertikalkraft aus dem sog. Kraftschlußkegel abgeleitet-bekannt, so daß wesentlich genauer als im bekannten Stand der Technik eine Kraftschluss-Reserve als Differenz dieser beiden bekannten Werte bestimmt werden kann. Diese Kraftschluss-Reserve kann dann herangezogen werden, um ein Fahrdynamik-Regelsystem in günstiger Weise betreiben zu können, was an späterer Stelle noch näher erläutert wird.

Zunächst sei jedoch eine vorteilhafte Weiterbildung der vorliegenden Erfindung beschrieben, die die Kraftschluss-Reserve bzw. das unter der jeweiligen aktuellen Kraftschluss-Ausnutzung noch vorhandene Kraftschluss-Potential quasi auf die einzelnen Koordinaten des Raumes bzw. Koordinatensystems aufteilt. Von Interesse ist somit nicht nur der kürzeste Abstand des augenblicklichen Betriebspunktes bis zur Kraftschlußgrenze innerhalb der aktuellen Kraftschlußellipse, sondern auch die maximal mögliche Änderung für jede der drei Kräfte Fₓ, F_{y} und F_{z}, und zwar jeweils innerhalb des bereits erläuterten Kraftschlußkegels soweit, bis das insgesamt zur Verfügung stehende Kraftschluss-Potential ausgeschöpft ist. In anderen Worten ausgedrückt kann sodann ermittelt bzw. berücksichtigt werden, welche Kraftschluss-Reserve bspw. in Längsrichtung (x) noch vorhanden ist, nachdem sich die Radlast in Vertikalrichtung (F_{z}) verändert hat oder mittels einer geeigneten Maßnahme sogar in geeigneter Richtung gezielt verändert wurde.

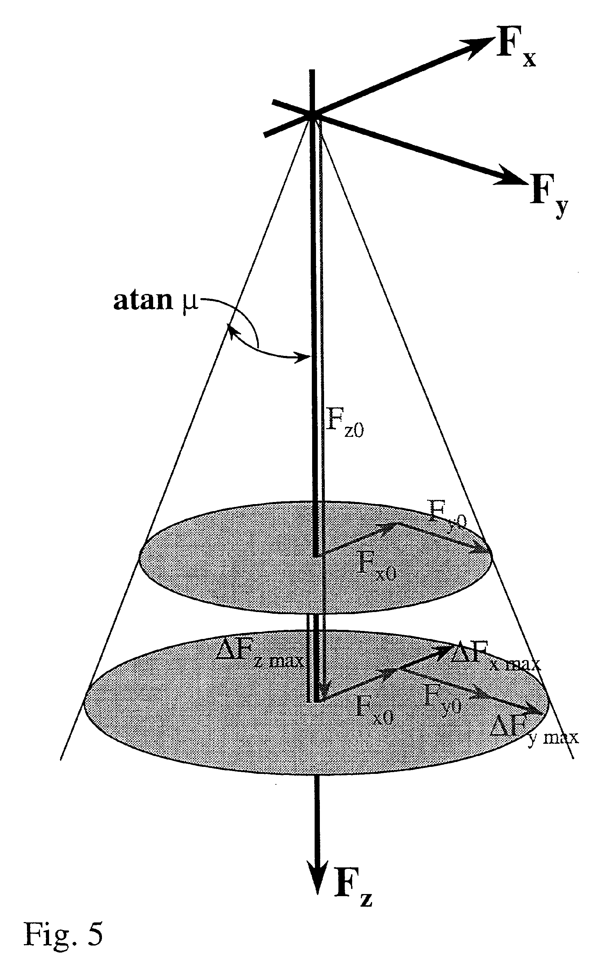

Am Beispiel des beschriebenen und in **Fig.3a** dargestellten Kraftschluss-Kegels mit elliptischer Grundfläche ergeben sich die in **Fig.3b** in Form von Gleichungen angegebenen maximal möglichen Änderungen für die Kräfte F in den einzelnen Koordinaten-Richtungen x, y, z, wobei ausdrücklich darauf hingewiesen sei, dass eine derartige Berechnung lediglich als ein Ausführungsbeispiel zu verstehen ist. Anhand von **Fig.5** wird dieses Verfahren im folgenden nochmals ausführlicher erläutert:
Ausgehend von einem aktuellen Betriebspunkt auf der unteren Ellipse, der durch die Vertikalkraftkomponente F_{z0} sowie die Längskraft Fₓ₀ und die Seitenkraft F_{y0} beschrieben ist - (diese Komponenten stellen die momentane Kraftschluss-Ausnutzung dar) -, werden einerseits die jeweiligen Kraftschlußreserven in x- und y-Richtung (nämlich ΔF_{x,max} und ΔF_{y,max}) bestimmt. Gleichzeitig wird angegeben, wie stark sich die Vertikalkraft noch ändern dürfte, bis das Rad an seiner Kraftschluss-Grenze angelangt ist. Bspw. gibt in **Fig.5** der Vektor ΔF_{z,max} an, wie weit das Rad noch ausfedern dürfte, bis bei unveränderten Horizontalkräften das zur Verfügung stehende Kraftschluss-Potential ausgeschöpft ist. Wie ersichtlich führt der Vektor ΔF_{z,max} von der unteren Ellipsen-Ebene zu einer darüber liegenden Ellipse, in welcher ein Betriebspunkt mit diesen Horizontal-Kräften Fₓ₀ und F_{y0} exakt auf dem Ellipsenrand liegt und somit das zur Verfügung stehende Kraftschlußpotential vollständig ausschöpft.

Auf die beschriebene Weise können somit für jedes Rad separat die aktuellen Kraftschlussreserven unter Berücksichtigung aller drei Dimensionen ausreichend genau (und wegen der Berücksichtigung der Vertikalbewegungen des Aufbaus vor allem erheblich genauer als im bekannten Stand der Technik) ermittelt werden. Daraufhin ist es möglich, diese ermittelten Kraftschluss-Reserven einem sogenannten "Kraftschlussregler" zuzuführen, der unter Berücksichtigung des gewünschten Fahrmanövers eine günstige Nutzung des aktuellen Kraftschlusspotentials veranlasst. Ehe hierauf näher eingegangen wird, sei noch darauf hingewiesen, daß für Fälle, in denen eine höhere Genauigkeit als gemäß der obigen Beschreibung berechnet erwünscht wird, sich die genannten Reifenkennfelder anstelle durch die sog. Kraftschluss-Ellipsen mathematisch durch Polynome in beliebiger Genauigkeit annähern lassen. Dann mutieren die Ellipsengleichungen in Fig. 3b zu Parabeln n-ter Ordnung und der bislang sog. Kraftschlußkegel läßt sich dann bspw. durch ein sog. dreidimensionales Polynom-Kennfeld darstellen. Ferner sei darauf hingewiesen, daß für die Beschreibung des erfindungsgemäßen Verfahrens zur Ermittlung des Kraftschlußpotentials ein an sich bekannter Fahrdynamikregler als Basissystem gewählt wurde, weil ein solcher i.a. mit den wichtigsten Sensoren ausgestattet ist, die zur Bestimmung des Kraftschlusses erforderlich sind. Stattdessen können jedoch auch andere Systeme mit ähnlicher Sensorik zugrunde gelegt werden.

An das soweit beschriebene System kann sich nun - wie bereits kurz erwähnt wurde - ein sog. Kraftschlußregler anschließen, der unter Berücksichtigung des gewünschten Fahrmanövers eine günstige Nutzung des aktuellen Kraftschlußangebotes veranlaßt. Mit dem Begriff "Kraftschlußregler" wird ein bspw. innerhalb eines Fahrdynamikreglers enthaltener Funktionsumfang bezeichnet, der zur Optimierung des Kraftschlusses dient. Bevorzugt erfolgt nun in diesem Kraftschlußregler eine Priorisierung bzw. Aufteilung des berechneten bzw. übermittelten Kraftschlußpotentials an die beteiligten Regelfunktionen nach einem festgelegten Schlüssel. Dabei kann ein derartiges Verfahren zur Optimierung des Kraftschlusses in der zuvor beschriebenen Weise zur Funktionsoptimierung eines an sich bekannten, üblichen Fahrdynamikreglers herangezogen werden. Die Vorteile des Verfahrens werden aber offenkundiger, wenn der Fahrdynamikregler mit zusätzlichen Fahrwerk-Regelfunktionen verknüpft wird, wie z.B. mit einer elektronisch regelbaren Hinterachslenkung oder einer Vorderachs-Überlagerungslenkung, wobei es sich bei diesen beiden Systemen um querdynamische Regelsysteme handelt. Dann können die Eingriffe in die Steuerung des Antriebsaggregates sowie in das Bremssystem und Lenkungssystem des Kraftfahrzeuges derart aufeinander abgestimmt werden, daß das vorhandene Kraftschlußpotential optimal oder quasioptimal ausgenutzt wird.

In Ergänzung zu diesen genannten Systemen oder aber auch anstelle querdynamischer Systeme kann ein erfindungsgemäßer Fahrdynamikregler auch mit einem oder mehreren vertikaldynamischen Regelsystemen kombiniert werden, wie z.B. mit einer elektronischen Dämpfkraftverstellung, einer Stabilisatorverstellung oder einer aktiven Federung, die vornehmlich der Verbesserung des Fahrkomforts dienen. Da sich über diese Systeme die Radlasten direkt beeinflussen lassen, können sie ebenfalls zur Verbesserung des Fahrverhaltens und der Fahrsicherheit herangezogen werden.

In einer bevorzugten Ausführungsform kann der sog. Kraftschlußregler neben der Ermittlung des aktuellen Kraftschlußangebots darüber hinaus die Aufgabe haben, die jeweiligen Anforderungen der beteiligten Systeme miteinander zu vergleichen und Prioritäten für ihre Umsetzung festzulegen. Beispielsweise bzw. bevorzugt kann/sollte an erster Stelle die Fahrsicherheit stehen, wonach allgemein auf ein gutes Fahrverhalten Wert gelegt werden kann und woran sich als letztes (mit der geringsten Wichtigkeit) sog. Komfortfunktionen anschließen können.

In diesem Sinne haben Bremsvorgänge, die vom Fahrer eingeleitet werden, Vorrang vor allen anderen Regelungsfunktionen; d.h. alle Stellsignale an die möglichen Aktuatoren, über die Einfluß auf die Fahrdynamik genommen werden kann, werden hinsichtlich ihrer Auswirkungen auf den Kraftschluß überprüft und ggf. derart korrigiert, dass eine maximale Bremsverzögerung erzielt wird. Selbstverständlich können nach Möglichkeit daneben aber auch andere Funktionen mit erfüllt werden. Wird z.B. das Fahrzeug während einer Stabilitätsregelung in der Kurve vom Fahrer stark abgebremst, so können die Bremskräfte derart verteilt werden, dass sich neben dem kürzestmöglichen Bremsweg auch ein weitgehend stabiles Kurvenverhalten einstellt. Darüber hinaus kann über die vertikaldynamischen Regelsysteme - in diesem Fall insbesondere über die elektronische Stabilisatorverstellung - zusätzlich noch Einfluß auf die Radaufstandskräfte genommen werden, mit dem Ziel, die Radlasten an diejenigen Räder zu verlagern, die den höchsten Kraftschlussbedarf haben.

Von einer optimalen Ausnutzung des vorhandenen Kraftschlußpotentials profitieren nicht nur die längsdynamischen und querdynamischen Regelsysteme zur Optimierung der Fahrsicherheit und des Fahrverhaltens, sondern auch die vertikaldynamischen Regelsysteme mit ihrer primären Aufgabe, den Fahrkomfort zu verbessern: Je besser erstere das aktuelle Kraftschlussangebot kennen und je effizienter sie damit umgehen, desto weniger Sicherheitsreserven müssen vorgehalten werden und desto größer bleibt der Abstimm-Spielraum für die sog. Komfortsysteme. Die entsprechende Umsetzung kann dabei mit einem erfindungsgemäßen Fahrdynamik-Regelsystem besonders effizient erfolgen. Dabei kann der diese Umsetzung vornehmende Kraftschlußregler entweder von vorneherein in der Systemarchitektur eines Fahrdynamik-Regelsystem berücksichtigt oder auch nachträglich hinzugefügt werden, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Fahrdynamik-Regelverfahren für ein insbesondere vierrädriges Kraftfahrzeug, wobei das zwischen Rädern und Fahrbahn zur Verfügung stehende Kraftschluss-Potential ermittelt und durch Vergleich mit der ebenfalls ermittelten momentanen Kraftschluss-Ausnutzung eine Kraftschluss-Reserve bestimmt wird,
**dadurch gekennzeichnet, daß** neben den in der Horizontalebene wirkenden Kräften zusätzlich die Vertikalbewegungen des Kraftfahrzeug-Aufbaus gegenüber den Rädern bei der Bestimmung der Kraftschluss-Reserve berücksichtigt werden.

2. Fahrdynamik-Regelverfahren nach Anspruch 1,
**dadurch gekennzeichnet, daß** durch Multiplikation der in Vertikalrichtung orientierten Radlast mit einem geschätzten oder mittels eines Sensors ermittelten Reibwert zwischen Radreifen und Fahrbahn die vom Radreifen maximal übertragbare Horizontalkraft ermittelt wird, woraus mit den geeignet geschätzten aktuellen Werten für die in der Horizontalebene wirkende Längskraft und Seitenkraft die Kraftschluss-Reserven in Fahrzeug-Längsrichtung und in Fahrzeug-Querrichtung und in Vertikalrichtung ermittelt werden.

3. Fahrdynamik-Regelverfahren nach Anspruch 2,
**dadurch gekennzeichnet, daß** die ermittelten Kraftschluss-Reserven einem sog. Kraftschlussregler übermittelt werden, der unter Berücksichtigung des gewünschten Fahrmanövers eine günstige Nutzung des aktuellen Kraftschlußangebotes veranlaßt.

4. Fahrdynamik-Regelverfahren nach Anspruch 3,
**dadurch gekennzeichnet, dass** im Kraftschluss-Regler eine Priorisierung vorgenommen wird, dahingehend, dass Bremsvorgänge im Hinblick auf die Fahrsicherheit die höchste Priorität erhalten, während einem guten Fahrverhalten sowie allgemeinen Komfortfunktionen eine geringere Priorität zugeordnet wird.

5. Fahrdynamik-Regelverfahren nach einem der vorangegangenen Ansprüche,
**dadurch gekennzeichnet, dass** die in Vertikalrichtung orientierte Radlast aus den Signalen von an jedem Rad vorgesehenen Aufbau-Höhenstandssensoren bestimmt wird.
